(19) Europäisches Patentamt
European Patent Office
Office européen des brevets

(11) **EP 2 006 792 A2**

(12) **EUROPEAN PATENT APPLICATION**

(43) Date of publication:
**24.12.2008 Bulletin 2008/52**

(51) Int Cl.:
***G06F 21/24*** *(2006.01)*

(21) Application number: **08104358.0**

(22) Date of filing: **11.06.2008**

| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS**<br><br>(30) Priority: **21.06.2007 CN 200710111294** | (71) Applicant: **SIEMENS AKTIENGESELLSCHAFT**<br>**80333 München (DE)**<br><br>(72) Inventors:<br>• **Tang, Wen, Dr.**<br>  **Beijing 100102 (CN)**<br>• **Hu, Jian Jun**<br>  **Beijing 100102 (CN)** |
|---|---|

(54) **Encryption and decryption methods and a PLC system using said methods**

(57) The present invention involves the industrial computer software security field, and more specifically encryption and decryption methods as well as the PLC system which uses said methods. The encryption method of the present invention comprises the steps comprising: storing an algorithm F() in the system, mapping a stored unique identifier to a key K by using this algorithm, and encrypting the information stored in the memory using said key K through the symmetrical encryption algorithm. The present invention has the benefit of enhancing the security of the software codes.

Figure 2

EP 2 006 792 A2

**Description**

**Technical Field**

The present invention involves the software security field, and more specifically encryption and decryption methods as well as the PLC system for the application of said methods.

**Prior Art**

The programmable logic controller (PLC) or programmable controller is widely used in manufacturing automation, for example application in controlling the assembly lines. The existing PLCs are usually operated and controlled using program/control parameters, e.g. using ladder logic and status transition charts (program codes in industrial control). However, the existing PLCs are unable to provide good access control mechanisms, for example encryption of software, to prevent disclosure of the control programs, especially when some existing control programs are stored in a hot-swappable storage medium, such as a multimedia card (MMC) and a Security Digital Card (SD card), in which case the control programs can be easily disclosed, possibly causing damage to the manufacturers who produce such control programs.

Without proper access control, anyone (possibly including users with malicious intentions or for industrial espionage) may access the control program stored in the PLC by directly operating the PLC or through the network and thereby wilfully performing reading/writing/executing operations on the PLC control programs. In addition, the current situation is that the control program is very important in applications for automated production and process control within businesses, and has become a critical factor for the availability, efficiency, performance, productivity, production security and confidentiality of the automated system; therefore the control program has become an important software asset in the automated system. The PLC having no proper protection measures or having only very vulnerable protection measures may cause security threats to the automated system and damage to business property, resulting in loss of market share.

US Patent US 20040260954 A1 "Biometrics PLC Access Control System and Method" discloses an automated system which is used to access the control subsystem of the PLC. This system comprises a PLC-based server which is used to receive the biological unique identifier (such as a fingerprint) of the accessing person and verify the unique identifier to determine whether the accessing person is allowed to access the PLC. But this solution can only either permit user access or deny user access to the PLC and can neither encrypt the source codes of the control program, nor further limit users to access to which type of PLC control programs or to not having access to which type of control programs.

Currently, PLC300 produced by Siemens uses the MMC card to store the control programs and said MMC has a special format to prevent recognition by a standard MMC reader and only a special card reader (the card reader is usually used by the programmers for design of the control programs) which uses the PLC of Siemens or is produced by Siemens can obtain the contents stored in the MMC cards.

Neither of the abovesaid two methods is to encrypt the PLC software to provide access control.

Among the existing technologies, there are many methods used to encrypt the data stored in the computer, such as Chinese Patent Application No. 02152606.0 which discloses a data encryption and decryption method and device, which solution combines multiple pre-designed encryption algorithm modules and works with the dynamic selection area mechanism corresponding to the data property to select a group of encryption algorithm modules to encrypt the data. The method requires a large amount of computation and is suitable for application in computers with a powerful computation capacity.

For industrial automation, the programmable logic controller (PLC) or programmable controller is different from the existing computers because most of the industrial controllers have a relatively limited processing capacity, unable to perform complicated computation like a computer. Therefore the data processing methods applied in the computer industry largely cannot be utilized for industrial control. On the other hand, the system design structure of an industrial controller is also different from a computer, for example some of the memories in the industrial controllers do not allow access by users and can only be accessed by the operating system of the industrial controller; therefore many existing data processing methods used for computers are not suitable for running on industrial controllers.

**Summary of the Invention**

In order to overcome the above problems, the present invention provides an encryption method which can offer better protection of the software source codes, especially the PLC control program source codes.

The present invention further provides a decryption method for mapping the unique identifier stored in the memory to a key K, and using the key to decrypt the information stored in the memory.

The present invention also provides a PLC system for application of the abovesaid encryption or decryption methods. The system provides better key security by using a mapping module and an access control module, and delivers better results in the security of the software source codes by delineating the user access privileges.

An encryption method: to store an algorithm F() in a system in which said memory resides, use the algorithm to map the unique identifier stored in the memory to a key K, and using said key K encrypt the information stored in said memory through the symmetrical encryption algorithm.

In a further aspect of the encryption method according to the present invention, said algorithm F() comprises predefining an m*n key factor matrix, wherein each of the elements in said key factor matrix is a randomly generated positive integer and both m and n are positive integers greater than 1; computing said unique identifier and selecting multiple key factors from the key factor matrix according to the computation results, and generating a key K based on said multiple key factors and using this key to encrypt the information stored in said memory.

In another further aspect of the encryption method according to the present invention, said computation of the unique identifier refers to a repeated hash operation of the unique identifier and mapping of the hash operation results to different elements in said key factor matrix.

In still another aspect of the encryption method according to the present invention, said system comprises a PLC system.

In yet another further aspect of the encryption method according to the present invention, said key factor matrix is stored in an anti-illegal read-write chip, or is encrypted using the PLC hardware parameters and is stored in the memory fixed in the PLC system, e.g. the original ROM or EPROM in the system.

In another further aspect of the encryption method according to the present invention, the information stored in said memory comprises the PLC control program.

In another further aspect of the encryption method according to the present invention, the method comprises predefining the access strategy based on the user identity in order to control the user's access to said PLC control program, and encrypting said access strategy using said key K and storing said access strategy in said memory.

In yet another further aspect of the encryption method according to the present invention, the method comprises encrypting said control program using a randomly generated key SK and storing said key SK in said access strategy, and encrypting said access strategy with the key K.

In still another aspect of the encryption method according to the present invention, said memory comprises: a memory fixed in the PLC system, such as ROM, EPROM and a portable memory, such as MMC, CF cards.

A decryption method corresponding to the encryption method of the present invention, wherein the system, in which the memory resides, reads the unique identifier stored in the memory, and maps said unique identifier to a key K using an algorithm F() stored in said system, and decrypts the information stored in said memory with said key K through the symmetrical encryption algorithm.

In a further aspect of the decryption method according to the present invention, said algorithm F() performs the following function: computing said unique identifier and selecting multiple key factors from the key factor matrix stored in the system according to said computation results, generating a key K according to said multiple key factors, and decrypt the information stored in said memory with the key, wherein said key factor matrix is the m*n key factor matrix used for the encryption, and each element in said key factor matrix is a randomly generated positive integer, wherein both m and n are positive integers greater than 1.

A PLC system for applying the encryption or decryption method of the present invention comprises a CPU, a memory, a bus, a plurality of I/O modules, wherein said CPU, memory and I/O modules are all connected to said bus, and further comprises a mapping module which is connected to said bus and used to map the unique identifier of said memory to the key K and encrypts or decrypts the information stored in said memory with said key K through the symmetrical encryption algorithm.

In a further aspect of the PLC system according to the present invention, the system further comprises an access control module which is connected to said bus, and collects the identity information of the user through the I/O modules and controls the access of the user to the information stored in said memory based on said identity information.

In another further aspect of the PLC system according to the present invention, said access control module comprises an authority execution unit and an authority decision unit; said authority execution unit is connected to said bus and collects the identity information as well as the access information of the user, and then transmits said identity and said access information to said authority decision unit and controls the access of the user based on the results returned by the authority decision unit; said authority decision unit is connected to said bus and receives said identity and access information, and decides whether or not the access request of the user is legal based on the user access strategy stored in said memory, and then returns the decision it makes.

In yet another aspect of the PLC system according to the present invention, said memory comprises a memory fixed in the PLC system and a portable memory.

The present invention has the benefit of being able to protect the security of the software source codes, especially that it can better protect the PLC control program stored in the portable memory to prevent the deciphers decrypting the control programs of PLCs. Moreover, it can control the access to the control programs in the PLC application to further enhance the security of the PLC system.

**Description of the Drawings**

Figure 1 is a flowchart showing the application of the encryption method of the present invention in a PLC system;

Figure 2 is a flowchart of the decryption of the present invention showing how an encrypted MMC card is decrypted when it is inserted into a PLC;

Figure 3 is a block diagram showing the structure of a PLC system which uses the encryption method and access control of the present invention.

**Embodiments**

The present invention is further described below in combination with the attached drawings:

The present invention provides a method to protect the information stored in the memory, comprising selecting a password mapping algorithm F() to generate a key $Key_{ID}=F$ (ID) in conjunction with the unique identifier stored in the memory, wherein ID is the unique identifier stored in the memory, and the $Key_{ID}$ is the key, the F() may include but is not limited to key hash functions, which convert the unique identifier stored in the memory into the key $Key_{ID}$, and the F() may also use the ID-Key mapping methods as described in the following. The information stored in the memory is encrypted or decrypted with the symmetrical encryption algorithm that uses $Key_{ID}$ as the key. Only the PLC system is used herein as an example to describe the encryption and decryption memory of the control program in the PLC system and, of course the encryption and decryption algorithm of the present invention can also be used in existing computer systems. Moreover, the access control module can also be added to provide control on the user's access to the control programs based on the identity information of the user. Said access control module intercepts and captures all requests for access to the control programs in the memory, that is, the OS must obtain the permission from said access control module in order to access the control programs stored in the memory, thus achieving the objective of blocking access by unauthorized users. The encryption solution of the present invention is based on the unique identifier of the memory to protect the source codes of the PLC programs, such as the PLC's ladder chart, ladder logic, statement list, function module figure, function sequence diagram, structured text. The following embodiments list portable memories, such as MMC, SD cards, as the applicable memory but do not exclude such fixed memory as ROM and EPROM installed in the existing PLC systems because both portable and fixed memories have a unique identifier.

The following is an example of encryption of control programs according to the present invention:

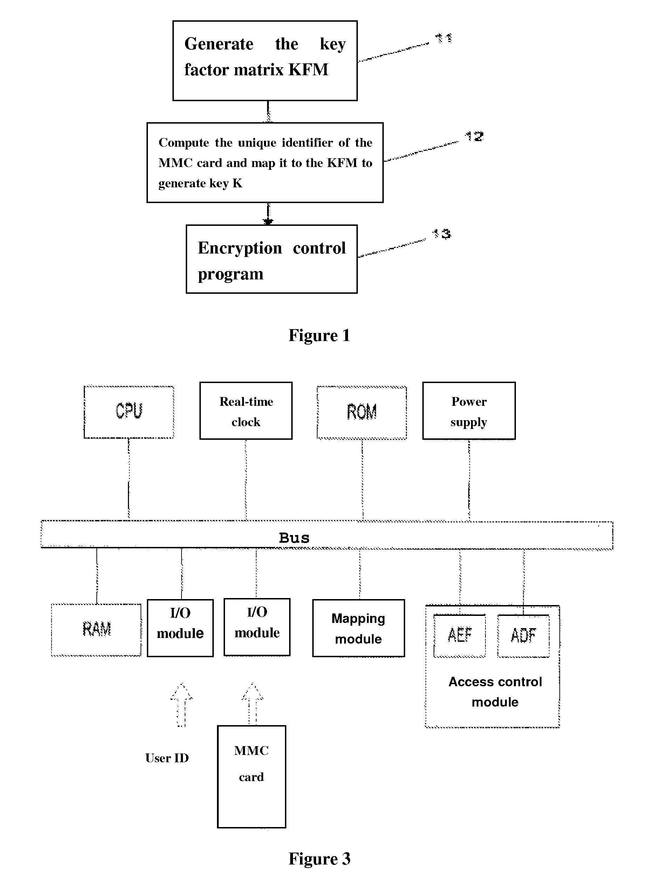

Consulting Fig. 1 which shows the flow of how the encryption method of the present invention in used in a PLC system, in Step 11, each MMC card has a unique identifier which is stored in the MMC card and cannot be changed. The PLC control program is stored in the MMC card.

During initialization, a key factor matrix (KFM) is generated as the mapping algorithm F().

$$KFM = \begin{bmatrix} k_{11} & k_{12} & \cdots & k_{1n} \\ k_{21} & k_{22} & \cdots & k_{2n} \\ \cdots & \cdots & \cdots & \cdots \\ k_{m1} & k_{m2} & \cdots & k_{mn} \end{bmatrix}$$

The KFM includes different key factors of m*n, wherein both m and n are positive integers greater than 1, and each of elements k or key factors in the matrix is a randomly generated positive integer, and said key factors are used to construct the key for protecting the privilege strategy.

The encryption method is used to store the KFMs in the PLC to prevent access and decryption by deciphers, and the KFMs in different PLCs are the same. KFMs can also be encrypted by using, for example, PLC hardware parameters (for example, the CPU number can be used as the key to encrypt the KFM because the operator cannot obtain the CPU number without removing and analyzing the CPU) and be stored in the memory of the PLC system, or the memory of the operating system (because the memory of the PLC storage operating system does not allow access by the operator, any deciphers will not be able to locate the KFM in the memory), or be stored in an anti-tampering device (such as an anti-decrypting storage chip which is sensitive to UV).

In Step 12, the unique identifier (ID) of the MMC card is used to encrypt the control program according to the following method,

$$h_1 = \text{hash (MMC ID)}, \qquad i_1 = h_1 \bmod m;$$

$$h_2 = \text{hash } (h_1), \qquad i_2 = h_2 \bmod m;$$

$$\ldots \ldots \ldots$$

$$h_n = \text{hash } (h_{n-1}), \qquad i_n = h_n \bmod m$$

m is the number of rows in the KFM key factor matrix, and n can also be used as divisor, and this is not limited to use of information - Digest Algorithm (MD5) and Secure Hash Algorithm (SHA-1), etc.

PLC uses $i_1$, $i_2$, ..., $i_n$ as the index of the rows to search for any KFM in the PLC, and to obtain n key factors $k_{i,1}$, $k_{i,2}$, ..., $k_{i,n}$,

Calculate:

$$K = k_{i,1} * k_{i,2} * \ldots * k_{i,n} \bmod 2^L,$$

Or calculate:

$$K = \text{hash}( k_{i,1} , k_{i,2} \cdots k_{i,n} )$$

L is the desired length of key K defined by the encryptor, namely L = length(K).

In Step 13, key K is used to encrypt the control program in the MMC card.

Preferably, to achieve access control in the PLC system for higher security, the storage area of the MMC card includes two segments. One segment is for storing the encrypted access strategies and said access strategies include, but are not limited to, DAC (Discretionary Access Control), MAC (Mandatory Access Control), RBAC (Role-Based Access Control). The access strategies may take various forms including, but not limited to, ACM (Access Control Matrix), ACL (Access Control List), CL (Capability List). This example adopts the ACL storage access strategy. The other segment is used to store multiple control programs that are encrypted and may belong to different owners (for example, developer or PLC operator on the production line). In order to make code cracking harder, the randomly generated key SK can be used to encrypt the control program P, and encryption algorithm E, such as AES, DES and other symmetrical algorithms. Preferably, to control the access of different users, a different key $SK_i$ is used to encrypt the control program $P_i$, and the key $SK_i$ is stored in a different ACL, wherein the $SK_i$ is a random number.

$C_i = E_{SK_i}(P_i)$, wherein $C_i$ is the encrypted control program.

A appropriate access rule for $P_i$ access is defined according to the demands of specific tasks and requirement of security for different users O (such as owner/developer/manager). For instance, said access rule is:

$$\text{ACL}_i = (\text{ID}_j, \text{ Permission, } \text{SK}_i, \text{ P}_i)$$

wherein $ID_j$ is the identifier for user j, permission is the specific privilege for the authorized users to access a certain $P_i$,

and the access privilege is, for example, reading/writing/executing, etc. Multiple access rules may be defined for different privileges used by multiple users for accessing one control program $P_i$, the key $SK_i$ is stored in the corresponding access rule of each control program $P_i$, or ACL may not contain $SK_i$, and the plaintext of all access rules is stored in the ACL segment of the MMC card. The symmetrical key algorithm with K as the key is used to encrypt the ACL.

During decryption, the above Step 102 and key factor matrix KFM will be used firstly to perform a hash operation of the unique identifier in the MMC card, to search for the KFM in the PLC based on the index of rows such as $i_1, i_2, ..., i_n$, and to obtain n key factors $k_{i,1}, k_{i,2}, ..., k_{i,n}$, and finally to obtain the key K by using the same method as that used for encryption to decrypt the control program stored in the MMC card or ACL segment.

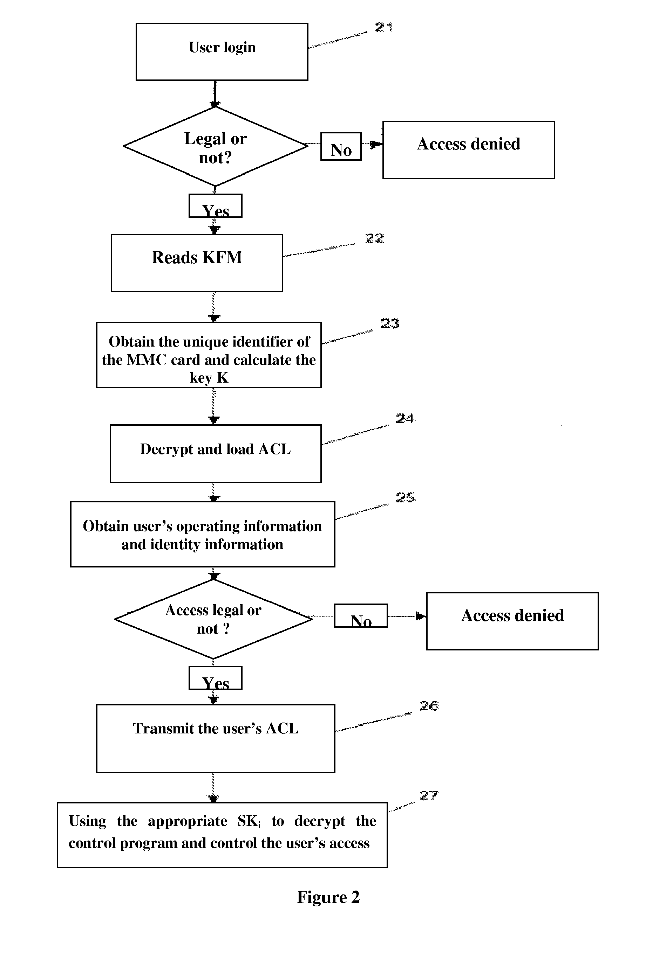

Figure 2 is a decryption flow chart showing how an encrypted MMC is decrypted when it is inserted into the PLC according to the present invention:

In Step 21, the user enters his/her own login password, and the authority execution unit in the access control module will verify the user's identity, and will proceed to Step 22 if the user identity verification of the authority execution unit is successful, or deny the access by the user if the verification fails. Preferably, the user uses the ID card representing his/her identity for logging in.

In Step 22, the PLC system reads the KFM, and decrypts the KFM if the KFM is encrypted;

In Step 23, the unique identifier of the MMC card is obtained from the MMC card reader and the privilege protection key K of the MMC card is computed according to the methods used in the encryption.

In Step 24, K is used to decrypt the ACL segment of the MMC card and all decrypted ACL rules are loaded into the access control module.

In Step 25, the user's identity information and operation information are obtained to determine whether access to the control program requested by the user is allowed. If the user meets the access privilege in the ACL, the system proceeds to Step 26 and if not, prompts the user with an illegal access message.

In Step 26, the corresponding ACL, which contains the user access privilege to a certain control program and the key $SK_i$ of this control program, will be issued.

In Step 27, the key $SK_i$ is used to decrypt the control program $P_i$ which the user is to access so that the control program stored in the MMC can be protected according to the visitor's privilege. Optionally, if the key SK is not used to encrypt the control program, and only the key K is used to encrypt the control program, then the ACL can also not contain the key field.

Figure 3 is a block diagram illustrating the structure of the PLC system which uses the encryption method and access control of the present invention. The PLC system comprise a bus, a CPU, a real-time clock, memories (RAM, ROM, EPRROM etc.), a plurality of I/O modules, a power supply module. In said PLC, RAM is the main memory of the CPU, the PLC's operating system is stored in a particular non-volatile memory, such as ROM, EPROM and Flash. The memory of the operating system is inaccessible for users so as to ensure the security of the operating system. When the PLC starts, the operating system will first be loaded into the RAM to control the PLC. Then, the PLC's control program is loaded into the RAM via the I/O module to execute the control task. The control program can be stored in the memory fixed in the PLC, such as the ROM memory as shown in Figure 3 (this ROM is different from the ROM or EPROM of the operating system). These memories for storing the control programs can be accessed by users for the purpose of modifying control programs, or the memory can also be portable MMC cards. In this example, the PLC control programs and access strategy are both stored in the MMC cards. Both the login information of the users and the control programs in the MMC card are transferred to the PLC system via the I/O module, and the I/O module, which reads the MMC cards, also reads the unique identifier of said MMC card. The mapping module is connected to said bus and is used to map said unique identifier to the key K and to encrypt or decrypt the information stored in said MMC card with the key through symmetrical encryption. The access control module is connected to said bus, and controls the access of the user to the information stored in said MMC card based on the user's identity information. Said access control module comprises an authority execution unit (AEF) and an authority decision unit (ADF). Said authority execution unit is connected to said bus and collects the identity information as well as the access information of the user from the I/O module on the bus, and transmits the identity and access information to said authority decision unit and controls the access of the user based on the results returned from said authority decision unit. Said authority decision unit is also connected to said bus and receives the identity and access information, and decides whether the access request of the user is legal based on the user access strategy stored in said MMC card, and returns its decision result.

The working procedure of the PLC system that uses the encryption method and access control of the present invention is described below:

When the user inserts his/her own ID card into the card reader (I/O module), the authority execution unit of the access control module will verify the user identity stored in the ID card, and will deny access to the user if the user ID fails the verification.

After MMC card is inserted into the MMC card reader (not the same as the I/O module of user identity), the unique identifier of the MMC card is read and the mapping module will map this unique identifier to the key required for decryption and decrypt the ACL stored in the MMC card, and load the ACL to the ADF via the bus. At this time, ACL is plaintext, but the control program stored in the MMC card is still the cryptographic text encrypted with the SK.

The AEF receives the request of the user for access to a specific control program via the I/O module on the bus, and transmits the user ID and name of the requested control program to the authority decision unit via the bus.

The ADF determines whether the user can access the requested control program according to the ACL rules, if the access is permitted, the ADF will return the key $SK_i$ of the involved control program and the involved ACL rules to the AEF. If the user is not permitted to access the control program, the access request will be denied.

The AEF uses the $SK_i$ returned from the ADF through the above steps to decrypt said requested control program, and uses the permission value (reading/writing/executing) to control access to said requested control program by the user.

The benefit of the present invention is that it can protect the security of the software source codes, especially that it can provide better protection for the PLC control programs stored in portable memories to prevent any deciphers from cracking the control program of a PLC. In addition, it can control access to the control program in the PLC application to further enhance the security of the PLC system.

The above embodiments are intended only to describe the present invention, and not to limit the present invention.

**Claims**

1. A method to encrypt the information stored in a memory, **characterized in that** it comprises storing an algorithm F() in a system in which said memory resides, using this algorithm to map the unique identifier stored in the memory to a key K, and using said key K to encrypt the information stored in said memory through the symmetrical encryption algorithm.

2. The method to encrypt the information stored in a memory as claimed in claim 1, **characterized in that** said algorithm comprises predefining an m*n key factor matrix, wherein each of the elements in said key factor matrix is a randomly generated positive integer and both m and n are positive integers greater than 1; computing said unique identifier and selecting multiple key factors from the key factor matrix according to the computation results, and generating a key K based on said multiple key factors and using this key to encrypt the information stored in said memory.

3. The method to encrypt the information stored in a memory as claimed in claim 2, **characterized in that** said computation of the unique identifier refers to a repeated hash operation of the unique identifier and mapping of the hash operation results to different elements in said key factor matrix.

4. The method to encrypt the information stored in a memory as claimed in claim 3, **characterized in that** said system refers to a PLC system.

5. The method to encrypt the information stored in a memory as claimed in claim 4, **characterized in that** said key factor matrix is stored in an anti-illegal read-write chip, or is encrypted using the PLC hardware parameters and is stored in a ROM or EPROM.

6. The method to encrypt the information stored in a memory as claimed in claim 5, **characterized in that** the information stored in said memory comprises the PLC control program.

7. The method to encrypt the information stored in a memory as claimed in claim 6, **characterized in that** it comprises predefining the access strategy based on the user identity in order to control the user's access to said PLC control program, and encrypting said access strategy using said key K and storing said access strategy in said memory.

8. The method to encrypt the information stored in a memory as claimed in claim 7, **characterized in that** it comprises encrypting said control program using a randomly generated key SK and storing said key SK in said access strategy, and encrypting said access strategy with the key K.

9. The method to encrypt the information stored in a memory as claimed in claim 7, **characterized in that** said memory comprises: a memory fixed in the PLC system and a portable memory.

10. A decryption method corresponding to the encryption method as claimed in claim 1, **characterized in that** the system, in which the memory resides, reads the unique identifier stored in the memory, and maps said unique identifier to a key K using an algorithm F() stored in said system, and decrypts the information stored in said memory with said key K through the symmetrical encryption algorithm.

11. The decryption method as claimed in claim 10, **characterized in that** said algorithm F() performs the following functions: computing said unique identifier and selecting multiple key factors from the key factor matrix stored in the system according to said computation results, generating a key K according to said multiple key factors, and decrypting the information stored in said memory with the key, wherein said key factor matrix is the m*n key factor matrix used for the encryption, and each element in said key factor matrix is a randomly generated positive integer, wherein both m and n are positive integers greater than 1.

12. A PLC system for the application of the encryption or decryption method as claimed in claim 1 or 10, which comprises a CPU, a memory, a bus, a plurality of I/O modules, wherein said CPU, memory and I/O modules are all connected to said bus; said system is **characterized in that** it further comprises a mapping module which is connected to said bus and used to map the unique identifier of said memory to the key K and encrypts or decrypts the information stored in said memory with said key K through the symmetrical encryption algorithm.

13. The PLC system as claimed in claim 12, **characterized in that** it further comprises an access control module which is connected to said bus, which collects the identity information of the user through said I/O modules, and controls the access of the user to the information stored in said memory based on said identity information.

14. The PLC system as claimed in claim 13, **characterized in that** said access control module comprises an authority execution unit and an authority decision unit; said authority execution unit is connected to said bus and collects the identity information as well as the access information of the user, and then transmits said identity and said access information to said authority decision unit and controls the access of the user based on the results returned by the authority decision unit; said authority decision unit is connected to said bus and receives said identity and access information, and decides whether or not the access request of the user is legal based on the user access strategy stored in said memory, and then returns the decision it makes.

15. The PLC system as claimed in claims 12, 13 or 14, **characterized in that** said memory comprises a memory fixed in the PLC system and a portable memory.

Generate the key factor matrix KFM

Compute the unique identifier of the MMC card and map it to the KFM to generate key K

Encryption control program

**Figure 1**

CPU

Real-time clock

ROM

Power supply

Bus

RAM

I/O module

I/O module

Mapping module

AEF    ADF

Access control module

User ID

MMC card

**Figure 3**

**Figure 2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20040260954 A1
- CN 02152606